# FASCICULE DE BREVET EUROPEEN

(11) **EP 2 569 491 B1**
(45) Date de publication et mention de la délivrance du brevet: **29.01.2014**
(21) Numéro de dépôt: 11726862.3
(22) Date de dépôt: 09.05.2011
(51) Int. Cl.: A01G 9/10, C04B 28/26, C09K 17/52, C09K 21/14, D04H 1/425, D04H 1/4266, E04C 2/16, C04B 18/24, D04H 1/04, E04B 1/76, E04B 1/80, E04B 1/88, C04B 111/00, C04B 111/28, C04B 111/52, E04B 1/74

(54) **MATERIAU ISOLANT A BASE DE MICROFIBRES ISSUES DE FIBRES DE HAMPES DE BANANIERS FRUITIERS**
DÄMMSTOFF MIT MIKROFASERN AUS FASERN DES BANANENBAUMSTAMMS
INSULATION MATERIAL CONTAINING MICROFIBERS FROM STEM FIBERS OF BANANA FRUIT TREES

(30) Priorité: 11.05.2010 FR 1053652
(43) Date de publication de la demande: 20.03.2013
(73) Titulaire: Carpanzano, Fabrice, 13190 Allauch (FR); Carpanzano, Jérôme, 13013 Marseille (FR); Carpanzano, Laetitia, 13190 Allauch (FR); Orsini, Béatrice, 13013 Marseille (FR); Carpanzano, Joseph, 13013 Marseille (FR)
(72) Inventeur: Carpanzano, Fabrice, 13190 Allauch (FR); Carpanzano, Jérôme, 13013 Marseille (FR); Carpanzano, Laetitia, 13190 Allauch (FR); Orsini, Béatrice, 13013 Marseille (FR); Carpanzano, Joseph, 13013 Marseille (FR)
(74) Mandataire: Roman, Alexis
(86) Numéro de dépôt international: PCT/FR2011/000281
(87) Numéro de publication internationale: WO 2011/141644

(56) Documents cités:
- WO-A1-2005/092985
- WO-A1-2008/107664
- DE-A1- 4 207 243
- DE-A1- 4 424 403
- FR-A1- 2 846 685
- NL-C- 63 937

## Description

### Domaine technique de l'invention.

La présente invention a pour objet un matériau isolant thermiquement et/ou acoustiquement comportant essentiellement des microfibres végétales issues de fibres de hampes de bananiers fruitiers. Elle a également pour objet diverses utilisations de ce matériau ainsi que son procédé de fabrication.

Le domaine technique de l'invention est celui de la fabrication de matériaux de construction à base de fibres végétales, en particulier de matériaux utilisés comme isolant thermique et/ou acoustique pour les constructions d'habitations et de locaux industriels, pour l'industrie automobile, véhicules industriels, aéronautique et/ou spatiale ou encore le confinement de matériels ou enceintes portés à très hautes ou très basses températures. Elle concerne également le domaine technique des matériaux utilisés pour l'hydratation et la culture de végétaux.

### État de la technique.

On connaît des matériaux de construction isolants à base de fibres végétales telles que les fibres de chanvre ou de coton ainsi que les fibres de coco, de palmier, ou d'Abaca (Chanvre de Manille).

Les fibres de chanvre constituent de bons isolants thermiques et acoustiques, entièrement naturels et donc facilement recyclables. Toutefois, leur production nécessite de très lourds moyens ; en effet, il faut cultiver le chanvre, le récolter puis extraire les fibres avant de les mettre en forme.

Les laines de coton présentent l'avantage de pouvoir être produites à partir de fibres de coton recyclées obtenues par exemple par effilochage de vieux tissus, nettoyage et compactage des fibres. Néanmoins, ces laines de coton sont chères et présentent une très faible tenue mécanique.

Enfin, les isolants à base de fibres de coco, de palmiers ou d'Abaca sont très chers et nécessitent de très lourds moyens pour réaliser l'extraction et le traitement des fibres.

On connaît également dans l'art antérieur, des matériaux isolants à base de fibres végétales issues de bananier.

Le document brevet FR 2.846.685 (CARPANZANO, Joseph) décrit par exemple un panneau constitué essentiellement de fibres de peaux de bananes déshydratées. Le document brevet WO 2005/092985 (CARPANZANO, Joseph) décrit également un matériau à base de fibres végétales constitué essentiellement de copeaux de peaux de bananes et/ou de bananiers.

Le document brevet FR 2.583.743 (FRESSON) divulgue un béton léger à base de résidus d'exploitations agricoles, tels que les troncs de bananiers, traités de manière à obtenir des fibres s'entrecroisant au malaxage, en mélange avec un liant hydraulique.

Le document brevet NL 63.937 (KOOL) divulgue l'utilisation de résidus de régimes de bananes, coupés et pressés pour en enlever le jus, puis séchés et finalement divisés en particules fibreuses. Celles-ci sont mélangées à un liant pour être utilisées dans un matériau de construction.

L'article W.KILLMANN ET AL: « Verwertungsmöglichkeiten der Bananfasern » DEUTSCHE PAPIERWIRTSCHAFT, Vol. 1977, N°3, 1977, pages 61-65, décrit l'utilisation des parties fibreuses du bananier, après broyage, notamment pour la fabrication de matériaux isolants.

Les matériaux isolants décrits dans ces documents ont tous des propriétés isolantes acceptables.

L'objectif principal de l'invention est de fournir un nouveau matériau qui présente des propriétés d'isolation thermique et d'isolation acoustique supérieures à celles obtenues avec des matériaux à base de fibres végétales issues de bananiers.

Un autre objectif de l'invention est de proposer un procédé permettant de fabriquer simplement, rapidement et à moindre coût ce matériau isolant.

### Divulgation de l'invention.

La solution proposée par l'invention est un matériau utilisé comme isolant thermique et/ou acoustique, constitué essentiellement de microfibres issues de fibres de hampes de bananiers fruitiers.

Ce matériau présente des propriétés d'isolation acoustique et thermique bien supérieures aux matériaux d'isolation connus, en particulier par rapport aux autres matériaux utilisant des fibres issues des peaux de bananes, des troncs, des pseudo-troncs ou des tiges de bananiers, et ce tant aux températures positives que négatives. Le demandeur a en effet constaté que les fibres issues des hampes de bananiers présentent des propriétés d'isolation acoustiques et thermiques surprenantes, et plus particulièrement des propriétés de résistance à la chaleur et au froid.

Par *« microfibres* », on entend au sens de la présente invention des fibres ayant un diamètre compris entre 0,01 mm et 1 mm, et de préférence de l'ordre de 0,1 mm.

Par *« bananiers fruitiers »,* on entend notamment toutes sortes et espèces de bananiers regroupées sous le genre taxonomique Musa, de la famille des Musacées.

Par *« hampes de bananiers »,* on entend au sens de la présente invention, les tiges en forme de crosse dirigées vers le bas, qui émergent du sommet des bananiers et qui portent les bananes.

Les demandeurs ont constaté que les hampes de bananiers fruitiers sont constituées presque essentiellement de fibres ayant la propriété de se diviser en microfibres, alors que les fibres des autres parties du bananier sont uniques et indivisibles ou difficilement divisibles. Or, ces microfibres, lorsqu'elles sont agglomérées, ont la capacité d'emmagasiner un volume important de microbulles d'air qui participent à l'isolation thermique et acoustique du matériau final. Les demandeurs ont pu mettre en évidence que le volume d'air emmagasiné dans un agglomérat de microfibres issues de fibres de hampes de bananiers est supérieur (de 5 % à 30 % selon la densité du matériau fini) au volume d'air emmagasiné dans un agglomérat de simples fibres issues des autres parties du bananier (troncs, pseudo-troncs, feuilles, peaux de bananes, ...). Il en découle que le matériau objet de l'invention présente des propriétés d'isolation thermique et acoustique supérieures à celles des matériaux à base de fibres issues d'autres parties du bananier et connus de l'art antérieur.

Dans le but d'optimiser l'agglomération des microfibres et d'emmagasiner davantage de microbulles d'air, lesdites microfibres sont avantageusement mélangées à un liant fibreux.

Le matériau isolant est avantageusement constitué d'au moins 80%, de préférence au moins 90%, de microfibres issues de fibres de hampes de bananiers fruitiers.

Selon un mode préféré de réalisation le matériau isolant se présente sous forme de panneaux, de rouleaux ou de microfibres à souffler ou à floquer.

Un autre aspect de l'invention concerne un procédé de fabrication de ce matériau isolant. Ce procédé consiste à :
- effilocher des hampes de bananiers fruitiers de manière à séparer les fibres desdites hampes en microfibres,
- écraser les microfibres obtenues pour les aplatir puis les effilocher de nouveau.

On obtient ainsi des microfibres ayant un diamètre minimal.

De manière avantageuse, on mélange les microfibres obtenues avec un liant ; on introduit le mélange dans des moules, des gabarits, ou des outils de nappage ; et on chauffe ce mélange pour assurer la mise en forme définitive du matériau.

Avant ou pendant le mélange des microfibres avec le liant, lesdites microfibres peuvent subir un traitement ignifuge et/ou antibactérien et/ou fongicide.

Pour augmenter le volume d'air emmagasiné dans le matériau et augmenter les propriétés isolantes de ce dernier, les microfibres sont préférentiellement mélangées avec de l'alumine et du potassium de manière à générer des microbulles d'hydrogène. Après avoir introduit le mélange dans les moules, les gabarits ou les outils de nappage, ledit mélange est chauffé pour remplacer lesdites microbulles d'hydrogène par des microbulles d'air.

Dans une variante de réalisation, les microfibres sont mélangées à un liant et éventuellement à de l'eau, pour obtenir un mélange pâteux. Ce dernier est ensuite mélangé à de l'alumine et du potassium, de manière à former des microbulles d'hydrogène. Le produit pâteux résultant est alors enduit sur un support puis chauffé de façon à remplacer les microbulles d'hydrogène par des microbulles d'air.

Encore un autre aspect de l'invention concerne l'utilisation du matériau isolant, pour l'hydratation et la culture de végétaux, sous forme de panneaux ou de rouleaux aptes à être appliqués sur, ou enterrés dans, le sol du terrain à cultiver.

Encore un autre aspect de l'invention concerne l'utilisation du matériau isolant comme paillage, les microfibres étant aptes à être appliquées en vrac aux pieds de végétaux pour limiter l'évaporation et/ou la pousse des mauvaises herbes et/ou comme protection thermique.

D'autres aspects supplémentaires de l'invention concernent l'utilisation du matériau isolant :
- comme ignifuge, sous forme de panneaux ou de rouleaux aptes à être appliqués sur au moins un autre matériau à ignifuger,
- comme agent filtrant, en étant préférentiellement intégré dans une membrane, un filtre ou tout autre dispositif de filtration équivalent,
- pour la réalisation de produits post-formés tels que coque, support de carte à puce, support de composants électroniques.

D'autres avantages et caractéristiques de l'invention apparaîtront mieux à la lecture de la description qui va suivre, réalisée à titre d'exemple indicatif et non limitatif.

### Modes de réalisation de l'invention.

Le matériau objet de l'invention est fabriqué à partir de microfibres agglomérées issues de fibres de hampes de bananiers fruitiers. Ces hampes peuvent être utilisées à l'état naturel comme matière première, sans nécessiter de traitements ni d'extractions ; ceci permet de limiter considérablement les coûts de production du matériau mais également que celui-ci soit totalement naturel et ainsi intégralement et très facilement recyclable. Les microfibres obtenues peuvent éventuellement subir un traitement ignifuge et/ou antibactérien et/ou fongicide, mais cela n'est pas nécessaire.

Le matériau est constitué essentiellement de microfibres agglomérées ou non, issues de fibres de hampes de bananiers fruitiers, c'est-à-dire constitué d'au moins 50% de microfibres, avantageusement d'au moins 80% de microfibres agglomérées, de préférence au moins 90%, et le cas échéant de 100%. Une telle proportion confère au matériau une très faible toxicité pour l'environnement, et une très bonne recyclabilité, même lorsque les microfibres sont mélangées avec un liant. De plus, cela réduit fortement les coûts de matière première et donc de production du matériau.

En pratique, le diamètre de microfibres est compris entre environ 0,01 mm et 1 mm, et en pratique de l'ordre de 0,1 mm suite à la technique d'effilochage poussée décrite ci-après dans la suite de la description.

Les microfibres peuvent être utilisées telles quelles ou agglomérées par un simple compactage. Toutefois, elles sont avantageusement densifiées afin d'améliorer la tenue mécanique du matériau. En pratique, les microfibres sont mélangées à un liant qui assure leur cohésion et améliore leur agglomération. Le matériau obtenu est ainsi plus rigide, avec une résistance mécanique plus élevée, plus facile à mettre en forme et aisément maniable. Le liant choisi peut être un liant fibreux sec, éventuellement synthétique du type polypropylène, ou un liant organique aqueux tel qu'une colle à base d'amidon ou une colle cellulosique, ou un liant inorganique aqueux tel qu'un liant hydraulique à base de silicate de sodium (Na₂SiO₃).

Le mélange microfibres/liant fibreux présente l'avantage de pouvoir emmagasiner une grande quantité de microbulles d'air et ainsi augmenter les capacités d'isolation thermique et acoustique du matériau.

D'autres composants et additifs appropriés convenant à l'homme du métier peuvent être combinés aux microfibres en fonction des utilisations du matériau de l'invention.

La constitution extrêmement simple du matériau de l'invention permet un conditionnement, une mise en forme, et une conservation sous des formes variées, qui sont plus particulièrement choisies en fonction des applications. Le matériau se présente toutefois préférentiellement sous forme de panneaux de ou de rouleaux de dimensions, densité et épaisseurs variées. Le matériau peut également se présenter sous forme de manchons, de tubes, de plaques, de feuilles, de molletons (par emprisonnement d'une épaisseur de matériau entre deux feuilles d'au moins un matériau souple et de préférence ignifugé, en particulier au moins un matériau textile), etc. De manière générale, il est possible d'obtenir des éléments rigides, semi-rigides ou souples, et à tout le moins gardant leur forme. Il peut en outre être utilisé à l'état brut, en vrac, pour l'hydratation et la culture de végétaux, par exemple en mélangeant les microfibres avec des terres ou des compositions pour l'hydratation et la culture de végétaux, ou en culture hydroponiques hors-sol. Les microfibres peuvent également être utilisées directement comme paillage. Les microfibres conviennent également pour des applications de revêtement par flocage mécanique ou manuel, par soufflage ou encore par moulage ou surmoulage sur des pièces complexes de machines thermiques ou mécaniques entre autres.

Le matériau présente des propriétés surprenantes d'isolation thermique, d'isolation acoustique, ignifuge et d'absorption de liquide.

Concernant les propriétés d'isolation thermique, des essais ont mis en évidence qu'un manchon d'une épaisseur comprise entre 0,5 cm et 1 cm constitué du matériau isolant, appliqué sur un conduit d'échappement d'une chaudière produisant un courant d'air chaud d'une température de 300°C environ, permet d'isoler parfaitement ledit conduit. L'élévation de température sur la surface externe du manchon au contact de l'air est très faible, de quelque degrés, ce qui permet un contact manuel sur ledit manchon sans impression de chaleur ni brûlures, même lors d'un contact prolongé de plusieurs dizaines de secondes.

En outre, des essais de mesure du coefficient de conductivité thermique ont permis de déterminer que le matériau présente des propriétés d'isolation thermique meilleures que celles obtenues avec le matériau décrit dans le document brevet WO 2005/092985 (CARPANZANO, Joseph), avec des valeurs de coefficient de conductivité thermique (λ) inférieures à 0,041 W/m.K, de l'ordre d'environ 0,038 W/m.K, et dans tous les cas inférieur aux coefficients de conductivité thermique des matériaux isolants d'origine végétale actuellement sur le marché.

On peut donc utiliser le matériau, de façon non limitative, pour réaliser le confinement de conduits de chaudières ou de cheminées, de ballons d'eau chaude pour particuliers ou professionnels, dans l'industrie aéronautique ou automobile pour le confinement de moteurs thermiques, de conduits d'échappement ou autres. Le matériau de l'invention permet également de réaliser l'isolation de dispositifs de production de froid comme les chambres froides, les réfrigérateurs, les voitures et camions frigorifiques.

On peut également utiliser le matériau sous forme d'enduit, de placage ou de revêtement sur ou contre des panneaux d'un autre matériau à isoler tel que des plaques de plâtre (type BA10, BA13) ou de bois par exemple, ou encore une couche isolante emprisonnée entre au moins deux dits panneaux d'un autre matériau. Il est également possible, en particulier pour des applications de calfeutrage et de confinement, de constituer un molleton constitué essentiellement d'une épaisseur de matériau selon l'invention, de préférence aggloméré sans liant, emprisonnée entre deux feuilles ou couches d'au moins un textile ignifugé.

Concernant les propriétés d'isolation acoustique, des essais de mesure du coefficient d'absorption acoustique au tube d'impédance effectués conformément à la norme NF EN ISO 10534-1 et 2 ont permis de déterminer que le matériau présente des propriétés d'isolation phonique meilleures que celles obtenues avec le matériau décrit dans le document brevet WO 2005/092985 (CARPANZANO, Joseph), avec des valeurs de coefficient d'absorption aux moyennes fréquences supérieures à 0,9.

Le matériau peut ainsi être utilisé comme isolant acoustique, par exemple de dalles de plafond, sous forme de panneaux, de plaques, ou encore de feuilles, molletons, rouleaux ou enduits, et dans les mêmes conditions qu'énoncées précédemment.

Concernant les propriétés ignifuges, les fibres de hampes de bananiers sont presque un ignifuge naturel auto-extinctible rendant le matériau ininflammable. Ainsi, une plaque d'une épaisseur de 3 cm formée par un nappage de microfibres agglomérées avec un liant à base de silicate de sodium sur laquelle on applique une flamme pendant une durée de 30 minutes ne prend pas feu et la dégradation visuelle n'est pas apparente. On constate également une absence de point rouge (ou point de fusion), les microfibres ne se consumant pas. Le matériau ne nécessite donc pas, ou peu, de traitement d'ignifugation des microfibres, afin de prévenir ou retarder les phénomènes de carbonisation surfacique du matériau soumis à un contact prolongé avec des flammes.

Dans cette application, le matériau peut être utilisé sous forme de panneaux ou de rouleaux appliqués sur au moins un autre matériau à ignifuger. En particulier, le matériau peut être utilisé en placage ou en revêtement, pour la réalisation de portes et de cloisonnements coupe-feu ou pour le confinement d'habitacles d'automobiles. On peut également prévoir de souffler ou de floquer directement les microfibres sur au moins un autre matériau à ignifuger.

Concernant les autres propriétés du matériau selon l'invention, des essais ont montré qu'une plaque d'un tel matériau était capable d'absorber un volume de liquide au moins égal à son propre volume. De telles propriétés d'absorption, combinées aux propriétés d'isolation thermique, en font un très bon rétenteur de liquides. Cela permet en particulier de pouvoir maintenir, par exemple dans des applications de cultures, un niveau d'hygrométrie élevé pendant une longue durée (au moins une semaine) en l'absence d'arrosage, ce qui permet par exemple une économie d'eau durant des périodes de chaleur, mais également de retenir l'eau dans les terres et prévenir du gel autour des racines de plantes en hiver. Le matériau peut également être utilisé comme paillage, les microfibres étant directement appliquées en vrac aux pieds de végétaux pour limiter l'évaporation et/ou la pousse des mauvaises herbes et/ou comme protection thermique.

En tant qu'absorbant, le matériau peut être utilisé sous forme de panneaux ou de rouleaux, aptes à être appliqués sur, ou enterrés dans, le sol du terrain à cultiver. En pratique, on prévoit un panneau d'environ 2 cm d'épaisseur que l'on enterre à quelques centimètres du sol. Une telle utilisation limite en outre la repousse de mauvaises herbes. Les microfibres peuvent également être directement mélangées dans des terreaux de culture.

Le procédé de fabrication du matériau va maintenant être décrit plus en détail. On récupère dans un premier temps les hampes de bananiers fruitiers à l'état naturel, sans être traitées ni préparées préalablement. On peut directement utiliser les hampes de productions bananières qui sont coupées après récolte des régimes de bananes.

On effiloche ces hampes de manière à séparer les fibres en microfibres. En pratique, les hampes passent dans une effilocheuse dont les aiguilles ouvrent les fibres pour faire apparaître les microfibres. On obtient ainsi des microfibres ayant un diamètre de l'ordre de 0,5 mm à 1 mm que l'on récupère à la sortie de l'effilocheuse sous forme d'un mélange grossier formé desdites microfibres et de substances contenues sous forme liquide dans les hampes tels qu'eau et amidon entre autres.

Après l'effilochage, il peut être avantageux d'éliminer la majorité de ces substances liquides. Pour ce faire, on presse le mélange résiduel obtenu à la sortie de l'effilocheuse, à l'aide d'une presse hydraulique sous une pression comprise entre 200 kg/cm² et 400 kg/cm². De préférence, le mélange résiduel est pressé entre des matrices de pressage chauffées à une température de l'ordre de 100°C à 120°C, ce qui permet d'effectuer un pré-séchage superficiel des microfibres.

Après avoir effiloché une première fois les hampes de bananiers, et éventuellement après pressage du mélange résiduel, les microfibres obtenues peuvent être écrasées entre deux cylindres de manière à les aplatir pour les effilocher une seconde fois. En effet, l'écrasement des microfibres augmente leur surface de telle manière que les aiguilles de l'effilocheuse puissent les diviser de nouveau. Il est alors possible d'obtenir des microfibres plus petites, ayant un diamètre de l'ordre de 0,1 mm.

Selon les applications, ces microfibres peuvent être utilisées en l'état ou au contraire agglomérées par un simple compactage sous presse ou mélangées à un liant, et éventuellement de l'eau, qui assure leur cohésion et améliore leur agglomération.

Le liant choisi peut être un liant fibreux du type polypropylène. Le mélange microfibres/liant fibreux présente l'avantage de pouvoir emmagasiner une grande quantité de microbulles d'air et ainsi augmenter les capacités d'isolation thermique et acoustique du matériau.

On peut également utiliser un liant organique aqueux tel qu'une colle à base d'amidon ou une colle cellulosique.

On peut encore utiliser un liant inorganique aqueux tel qu'un liant hydraulique à base de silicate de sodium (Na₂SiO₃), notamment un liant contenant 20% à 40% de silicate de sodium pour 60% à 80% d'eau et connu sous le nom chimique de silicate de sodium liquide neutre. Ce liant aqueux se présente sous la forme d'un liquide visqueux et incolore, permettant ainsi un mélange aisé avec les microfibres, qui solidifie à l'air et à la chaleur et qui présente les avantages essentiels d'être ininflammable et incombustible (Euroclasses A1 et A2), très peu toxique et facilement recyclable. Un tel liant est par exemple produit et commercialisé respectivement par les sociétés de droit belge SILMACO N. V et BRENNTAG N. V. sous la référence Silicate de Soude 38/40.

Le pourcentage de liant peut varier en fonction de la nature de ce dernier, de la densité finale souhaitée, des applications et des propriétés recherchées. A cet effet, on mélange dans un malaxeur les microfibres avec une faible quantité de liant, pour former un mélange d'une teneur d'au moins 80%, et de préférence au moins 90% en microfibres et d'au plus 20%, de préférence au plus 10% de liant. Ce mélange est ensuite introduit dans des moules, des gabarits ou des outils de nappage et pressé. L'ensemble est chauffé à une température de l'ordre de 100°C à 300°C, pendant quelques minutes pour assurer la mise en forme définitive du matériau. Lorsqu'un liant fibreux est utilisé, la montée en température du mélange fait fondre ce liant fibreux qui se mêle alors intimement aux microfibres. Ces dernières sont alors parfaitement agglomérées après refroidissement.

Le matériau peut également être mis en forme dans des moules de formage, le cas échéant en placage ou en mélange avec des matériaux thermoplastiques, pour confectionner des garnitures et tableaux de bords pour automobile.

Avant ou pendant le mélange des microfibres avec le liant, lesdites microfibres peuvent subir un traitement ignifuge et/ou antibactérien et/ou fongicide. En pratique, les microfibres sont trempées dans des bacs contenant des agents ignifuges, antibactériens et/ou fongicides.

Pour augmenter le volume d'air emmagasiné dans le matériau et augmenter les propriétés isolantes de ce dernier, les microfibres peuvent être mélangées avec de l'alumine et du potassium de manière à générer des microbulles d'hydrogène. Ce mélange peut être réalisé avant, pendant ou après le mélange avec le liant et avant le chauffage. Après avoir introduit le mélange dans les moules, les gabarits ou les outils de nappage, ledit mélange est chauffé dans un four ou une étuve, les microbulles d'hydrogène étant remplacées par des microbulles d'air sous l'effet de la chaleur.

Les microfibres peuvent également être mélangées, par exemple par malaxage, à un liant et éventuellement à de l'eau, pour obtenir un mélange pâteux. Ce mélange est ensuite mélangé à l'alumine et au potassium, de manière à former des microbulles d'hydrogène. Le produit pâteux résultant peut alors être enduit sur un support puis chauffé par l'intermédiaire d'un appareil chauffant type pistolet chauffant, de façon à remplacer les microbulles d'hydrogène par des microbulles d'air.

Les panneaux et feuilles de matériau ainsi réalisés sont ensuite démoulés et peuvent être conservés et stockés en l'état, ou sous forme de rouleaux, en vue de leurs utilisations futures, ou bien découpés selon des formats particuliers, par exemple en dalles ou panneaux de dimensions standards. Ils peuvent également le cas échéant subir un post-traitement contre la putréfaction ou encore être enduits pour améliorer leur esthétisme et surtout leur tenue mécanique ou leurs propriétés intrinsèques d'isolation ou d'absorption ainsi que de tenue au feu.

Ce matériau comportant essentiellement des microfibres végétales issues de fibres de hampes de bananiers fruitiers peut être utilisé dans de nombreuses autres applications.

Il peut notamment être utilisé comme agent filtrant de l'air, de l'eau et d'autres fluides pollués. Ce matériau présente en effet des propriétés d'absorption et/ou de rétention des agents polluants, par exemple ceux présents dans l'air ou dans un liquide tels que mercure, plomb (métaux lourds), déchets médicamenteux, déchets organiques, etc.

Les demandeurs ont constaté que les microfibres végétales issues de fibres de hampes de bananiers fruitiers ont la capacité de capter un volume important d'agents polluants. En effet, les microfibres présentent l'avantage de pouvoir emmagasiner une grande quantité de microbulles d'air et ainsi augmenter les capacités d'absorption et/ou de rétention du matériau.

Selon un mode préféré de réalisation le matériau filtrant est intégré dans une membrane, un filtre ou tout autre dispositif de filtration.

Les microfibres peuvent être utilisées telles quelles ou agglomérées par un simple compactage, dans un filtre ou une membrane filtrante. Toutefois, elles sont avantageusement densifiées afin d'améliorer la tenue mécanique du matériau. Les microfibres peuvent mélangées à un liant qui assure leur cohésion et améliore leur agglomération. Le liant utilisé est préférentiellement de l'argile qui est un matériau naturel présentant des propriétés de captation de mauvaises odeurs. Une fois les microfibres et l'argile combinés et mis en forme pour des applications de filtration, les propriétés d'absorption et/ou de rétention d'agents polluants sont optimisées. Ce même mélange peut évidement être utilisé pour d'autres applications et en particulier comme isolant thermique et/ou acoustique et/ou ignifuge, etc.

Pour augmenter le volume d'air emmagasiné dans le matériau et augmenter les propriétés d'absorption et/ou de rétention de ce dernier, les microfibres et l'argile peuvent être mélangées avec de l'alumine et du potassium de manière à générer des microbulles d'hydrogène. Ce mélange peut être réalisé avant, pendant ou après le mélange avec le liant et avant chauffage. Après avoir introduit le mélange dans des moules, les gabarits ou les outils de nappage, ledit mélange est chauffé dans un four ou une étuve, les microbulles d'hydrogène étant remplacées par des microbulles d'air sous l'effet de la chaleur.

Encore une autre application consiste à utiliser ces microfibres pour la réalisation de coque, de support de carte à puce ou de tout autre produit post-formé et utilisé dans les secteurs de l'industrie automobile, téléphonie, informatique (support de carte à puce, support de composants électroniques, ...). Dans cette application, les microfibres sont mélangées à des liants type plastique synthétique ou polyéthylène, ou amidon et polyester, etc.

## Revendications

1. Matériau isolant thermique et/ou acoustique, **caractérisé en ce qu'**il est constitué essentiellement de microfibres issues de fibres de hampes de bananiers fruitiers.

2. Matériau selon la revendication 1, **caractérisé en ce que** les microfibres sont mélangées à un liant fibreux.

3. Matériau selon l'une des revendications précédentes, **caractérisé en ce qu'**il est constitué d'au moins 80%, de préférence au moins 90%, de microfibres agglomérées issues de fibres de hampes de bananiers fruitiers.

4. Matériau selon l'une des revendications précédentes, **caractérisé en ce qu'**il se présente sous forme de panneaux, de rouleaux, ou de microfibres à souffler ou à floquer.

5. Procédé de fabrication du matériau selon la revendication 1, consistant à :
- effilocher des hampes de bananiers fruitiers de manière à séparer les fibres desdites hampes en microfibres,
- écraser les microfibres obtenues pour les aplatir puis les effilocher de nouveau.

6. Procédé selon la revendication 5, consistant à :
- mélanger les microfibres obtenues avec un liant,
- introduire le mélange dans des moules, des gabarits ou des outils de nappage,
- chauffer le mélange pour assurer la mise en forme définitive du matériau.

7. Procédé selon la revendication 6, dans lequel avant ou pendant le mélange des microfibres avec le liant, lesdites microfibres subissent un traitement ignifuge et/ou antibactérien et/ou fongicide.

8. Procédé selon l'une des revendications 6 ou 7, dans lequel :
- les microfibres sont mélangées avec de l'alumine et du potassium de manière à générer des microbulles d'hydrogène,
- après avoir introduit le mélange dans les moules, les gabarits ou les outils de nappage, ledit mélange est chauffé pour remplacer lesdites microbulles d'hydrogène par des microbulles d'air.

9. Procédé selon la revendication 5, dans lequel :
- les microfibres sont mélangées à un liant et éventuellement à de l'eau, pour obtenir un mélange pâteux,
- le mélange pâteux est mélangé à de l'alumine et du potassium, de manière à former des microbulles d'hydrogène,
- le produit pâteux résultant est enduit sur un support puis chauffé de façon à remplacer les microbulles d'hydrogène par des microbulles d'air.

10. Utilisation du matériau selon l'une des revendications 1 à 4, pour l'hydratation et la culture de végétaux, sous forme de panneaux ou de rouleaux aptes à être appliqués sur, ou enterrés dans, le sol du terrain à cultiver.

11. Utilisation du matériau selon l'une des revendications 1 à 4, comme paillage, les microfibres étant appliquées en vrac aux pieds de végétaux pour limiter l'évaporation et/ou la pousse des mauvaises herbes et/ou comme protection thermique.

12. Utilisation du matériau selon l'une des revendications 1 à 4, comme ignifuge, sous forme de panneaux, de rouleaux ou de microfibres à souffler ou à floquer, aptes à être appliqués sur au moins un autre matériau à ignifuger.

13. Utilisation du matériau selon l'une des revendications 1 à 4, comme agent filtrant.

14. Utilisation selon la revendication 13, **caractérisée en ce que** le matériau est intégré dans une membrane, un filtre ou tout autre dispositif de filtration équivalent.

15. Utilisation du matériau selon l'une des revendications 1 à 4, pour la réalisation de produits post-formés tels que coque, support de carte à puce, support de composants électroniques.

## Patentansprüche

1. Wärmedämmender und/oder schalldämmender Stoff, **dadurch gekennzeichnet, dass** er im Wesentlichen aus Mikrofasern besteht, die aus Fasern des Bananenbaumstamms stammen.

2. Stoff nach Anspruch 1, **dadurch gekennzeichnet, dass** die Mikrofasern mit einem Faserbindemittel gemischt sind.

3. Stoff nach einem der vorhergehenden Ansprüche, **dadurch gekennzeichnet, dass** er aus mindestens 80 %, bevorzugt mindestens 90 % agglomerierten Mikrofasern besteht, die aus Fasern des Bananenbaumstamms stammen.

4. Stoff nach einem der vorhergehenden Ansprüche, **dadurch gekennzeichnet, dass** er die Form von Platten, Rollen oder Blas-Mikrofasern oder Flock-Mikrofasern aufweist.

5. Verfahren zur Herstellung des Stoffs nach Anspruch 1, das darin besteht:
- die Bananenbaumstämme zu zerfasern, um die Fasern der Stämme in Mikrofasern zu trennen,
- Zermahlen der erhaltenen Mikrofasern, um sie zu glätten, dann erneutes Zerfasern der Mikrofasern.

6. Verfahren nach Anspruch 5, das darin besteht:
- die erhaltenen Mikrofasern mit einem Bindemittel zu mischen,
- das Gemisch in Formen, Schablonen oder Ablege-Werkzeuge einzuführen,
- das Gemisch zu erhitzen, um die definitive Formung des Stoffs zu gewährleisten.

7. Verfahren nach Anspruch 6, wobei die Mikrofasern vor oder während des Mischens der Mikrofasern mit dem Bindemittel einer Behandlung mit einem Flammschutzmittel und/oder einem antibakteriellen Mittel und/oder einem Fungizid unterzogen werden.

8. Verfahren nach einem der Ansprüche 6 oder 7, wobei:
- die Mikrofasern mit Aluminiumoxid und Kalium gemischt werden, um Wasserstoff-Mikroblasen zu erzeugen,
- nach Einführen des Gemischs in die Formen, die Schablonen oder die Ablege-Werkzeuge, das Gemisch erhitzt wird, um die Wasserstoff-Mikroblasen durch Luft-Mikroblasen zu ersetzen.

9. Verfahren nach Anspruch 5, wobei:
- die Mikrofasern mit einem Bindemittel und gegebenenfalls mit Wasser gemischt werden, um ein pastenförmiges Gemisch zu erhalten,
- das pastenförmige Gemisch mit Aluminiumoxid und Kalium gemischt wird, um Wasserstoff-Mikroblasen zu bilden,
- das resultierende pastenförmige Produkt auf einen Träger gestrichen, dann erhitzt wird, um die Wasserstoff-Mikroblasen durch Luft-Mikroblasen zu ersetzen.

10. Verwendung des Stoffs nach einem der Ansprüche 1 bis 4 zum Feuchthalten und zur Kultur von Pflanzen in Form von Platten oder Rollen, die geeignet sind, um auf die Erde der zu kultivierenden Fläche aufgebracht oder darin vergraben zu werden.

11. Verwendung des Stoffs nach einem der Ansprüche 1 bis 4 als Mulch, wobei die Mikrofasern lose am Fuß der Pflanzen aufgebracht werden, um die Verdampfung und/oder das Wachsen von Unkraut zu begrenzen und/oder als Kälteschutz.

12. Verwendung des Stoffs nach einem der Ansprüche 1 bis 4 als Flammhemmer in Form von Platten, Rollen oder Blas-Mikrofasern oder Flock-Mikrofasern, die geeignet sind, um auf mindestens einen anderen, flammhemmend auszurüstenden Stoff aufgebracht zu werden.

13. Verwendung des Stoffs nach einem der Ansprüche 1 bis 4 als Filtermedium.

14. Verwendung nach Anspruch 13, **dadurch gekennzeichnet, dass** der Stoff in eine Membran, einen Filter oder jede andere vergleichbare Filtervorrichtung integriert ist.

15. Verwendung des Stoffs nach einem der Ansprüche 1 bis 4 zur Herstellung von Postforming-Elementen, wie etwa Gehäuse, Chipkartenträger, Leiterplatten.

## Claims

1. Thermal and/or acoustic insulating material, **characterized in that** it is essentially composed of microfibres resulting from fibres of stalks of banana fruit plants.

2. Material according to Claim 1, **characterized in that** the microfibres are mixed with a fibrous binder.

3. Material according to either of the preceding claims, **characterized in that** it is composed of at least 80%, preferably at least 90%, of agglomerated microfibres resulting from fibres of stalks of banana fruit plants.

4. Material according to one of the preceding claims, **characterized in that** it is provided in the form of panels, of rolls or of microfibres to be blown or to be flocked.

5. Process for the manufacture of the material according to Claim 1, consisting in
- disaggregating the stalks of banana fruit plants, so as to separate the fibres of the said stalks into microfibres,
- crushing the microfibres obtained, in order to flatten them, and then disaggregating them again.

6. Process according to Claim 5, consisting in:
- mixing the microfibres obtained with a binder,
- introducing the mixture into moulds, templates or lapping devices,
- heating the mixture in order to ensure the definitive shaping of the material.

7. Process according to Claim 6, in which, before or during the mixing of the microfibres with the binder, the said microfibres are subjected to a flame-retarding and/or antibacterial and/or fungicidal treatment.

8. Process according to either of Claims 6 and 7, in which:
- the microfibres are mixed with alumina and potassium, so as to generate hydrogen microbubbles,
- after having introduced the mixture into the moulds, the templates or the lapping devices, the said mixture is heated in order to replace the said hydrogen microbubbles with air microbubbles.

9. Process according to Claim 5, in which:
- the microfibres are mixed with a binder and optionally with water, in order to obtain a pasty mixture,
- the pasty mixture is mixed with alumina and potassium, so as to form hydrogen microbubbles,
- the resulting pasty product is coated on a support and then heated, so as to replace the hydrogen microbubbles with air microbubbles.

10. Use of the material according to one of Claims 1 to 4, for the hydration and cultivation of plants, in the form of panels or of rolls capable of being applied to or embedded in the soil of the ground to be cultivated.

11. Use of the material according to one of Claims 1 to 4, as mulching, the microfibres being applied loose at the bases of plants in order to limit the evaporation and/or the growth of weeds and/or as thermal protection.

12. Use of the material according to one of Claims 1 to 4, as flame retardant, in the form of panels, of rolls or of microfibres to be blown or to be flocked, capable of being applied to at least one other material to be rendered flame retardant.

13. Use of the material according to one of Claims 1 to 4, as filtering agent.

14. Use according to Claim 13, **characterized in that** the material is incorporated in a membrane, a filter or any other equivalent filtration device.

15. Use of the material according to one of Claims 1 to 4, for the preparation of postformed products, such as shell, support for chip card or support for electronic components.
